# EUROPEAN PATENT SPECIFICATION

(11) **EP 2 782 407 B1**
(45) Date of publication and mention of the grant of the patent: **21.10.2020**
(21) Application number: 13160672.5
(22) Date of filing: 22.03.2013
(51) Int. Cl.: H04W 8/18, H04W 36/04, H04W 60/06, H04W 84/04, H04W 36/12

(54) **Method of managing subscriber information in a communication system and mobility management function**
Verfahren zur Verwaltung von Teilnehmerinformationen in einem Kommunikationssystem und Mobilitätsverwaltungsfunktion
Procédé de gestion d'informations d'abonnés dans un système de communication et fonction de gestion de mobilité

(43) Date of publication of application: 24.09.2014
(73) Proprietor: Vodafone GmbH, 40549 Düsseldorf (DE)
(72) Inventor: Lu, Yang, 40489 Düsseldorf (DE); Dawes, Peter, Swindon, SN1 4GB (GB)
(74) Representative: Müller, Thomas

(56) References cited:
- EP-A1- 2 187 665
- US-A1- 2010 159 945
- US-A1- 2012 021 736
- US-B2- 8 036 664

## Description

The present invention relates to a method of managing subscriber information in a communication system and to a mobility management function.

In communication systems, in particular in mobile communication networks, the current location of a mobile device of the user is crucial information, in order to be able to provide connectivity to the mobile device. Especially, when a user of the mobile device changes location, the tracking of the movement and handover of management to a different component of the communication system is mandatory.

Communication systems, in particular mobile communication networks are preferably structured by cells. In general, macrocells are used for handling mobile devices of users, which are also referred to as subscribers of the communication system. In such macrocells radio coverage is provided by nodes such as cellular base stations, Node-B or eNode-B, depending on the structure of the mobile communication network. Even though macrocells are suitable to cover larger areas which are less populated, that means where less users of mobile devices have to be served, also cells of smaller coverage areas are being used, to provide coverage for smaller areas such as a building. For small areas femtocells have been introduced. Femtocells are small cells, which form part of or are linked to cells of a mobile communication network, which is managed by mobile operators. To be able to account for a user with a mobile device moving from a femtocell to a macrocell, the information of a user of a mobile device has to be managed by or notified to the underlying or overlying mobile communication network, even when the user is camping in a femtocell.

However, in order to limit the signalling between the mobile device in a femtocell and the components of the mobile communications network, some information is at least temporarily handled in the femtocell, in particular at a femtocell access point (FAP) or a femtocell server.

For this purpose US 2012/0021736 A1 discloses a femtocell base station, communication control apparatus, communication system, control method and program. According to that document, the femtocell base station is a femtocell base station that connects the user equipment to a core network side and includes storing means and control means. The storing means retains subscriber information of the user equipment visiting an area under control of the femtocell base station. The control means deletes the subscriber information of the user equipment that is removed from the control of the femtocell base station from the storing means. The storing means are provided at the femtocell base station. In order to update the information, the femtocell performs monitoring of communication with the user equipment. If a prescribed time of non-communication has expired, the femtocell can trigger a de-registration process. One disadvantage of this approach is that the information about the current location or absence of user equipment in a femtocell is not available in real time. In addition, the requirements as to communication protocols are increased.

EP 2 187 665 A1 discloses a radio communication method, wherein a user equipment UE measures the reception level of a femtocell and when a value exceeding a threshold value is detected, a change from a multi tracking area registration to a single tracking area registration is requested by the UE from a Mobility Management Entity.

US 2010/159945 A1 describes a solution for collecting and communicating data on handset attachment procedure or visitation to one or more femtocells. This data is collected and communicated to provide Location Based Services.

The problem underlying the present invention is thus to provide an easy and reliable solution for a femtocell management unit to obtain information about a mobile device walking out of the coverage of the femtocell.

The invention is based on the finding that this problem can be solved by minimizing communication between components of the communication system and by storing information at appropriate locations within the communication system.

According to a first aspect, the problem is thus solved by a method of managing subscriber information of a user of a mobile device in a communication system comprising at least one femtocell management unit of a femtocell and at least one macrocell management unit of a macrocell, said method comprising the features of independent claim 1.

Managing of subscriber information according to the present invention in particular refers to storing, updating, deleting, transmitting and/or receiving subscriber information. Subscriber information may comprise identification information, positional information and address information. In particular, subscriber information preferably comprises information, which relates to the identity of the mobile device used by the subscriber or to the identity of the subscriber, i.e. the user and /or to the position of the mobile device within the communication system. The user of the mobile device will hereinafter also be referred to as the subscriber.

A mobile device, which will also be referred to as user equipment or UE may be any terminal device of a communication network, in particular a mobile communication network. The mobile device may thus be a mobile telephone, handheld or other mobile communication device, which has communication capabilities for communicating via a communication network, preferably a mobile communication network.

A communication system according to the present invention is a system comprising all components for communication of a mobile device with another mobile device or with another component of a communication network, such as a server. In particular, the communication system comprises a communication network, at least one mobile device and at least one femtocell management unit. The femtocell management unit may be part of the communication network or may be connected thereto. The communication network is preferably a mobile communication network and in particular a cellular mobile communication network. The communication network will hereinafter also be referred to as a core network.

According to the present invention the communication system comprises at least one femtocell management unit and at least one macrocell management unit. At least the macrocell management unit is preferably part of the communication network of the communication system, whereas the femtocell management unit(s) may be separate components to the communication network but are connected thereto for communication purposes. In particular, the femtocell management unit may or may not be under the control of a network operator of the communication network of the communication system.

According to the present invention, a femtocell management unit is referred to as a unit which directly or indirectly provides coverage of signals in the femtocell. The femtocell thus describes the area which is covered by the signals of the femtocell management unit. It has to be noted that in the related art femtocell is used as a synonym for a femtocell management unit. The distinction between femtocell and femtocell management unit is made in the present document for clarification purposes only and is not be construed as providing a different set-up from the known set-up of a femtocell in the related art. According to the present invention known set-ups can be used, which is advantageous as no or only little adaptation is necessary and the method is thus easy to implement.

The femtocell management unit may be the access point of the femtocell, which is also referred to as femtocell access point FAP or a femtocell server or a gateway. The femtocell, that means the area covered by the femtocell management unit, is small and in particular smaller than the area covered by a macrocell management unit, such as a base station, Node-B or eNode-B of a macrocell of the communication network.

A macrocell according to the present invention relates to a cell of the communication network of the communication system, in particular to a cell of a mobile communication network. The macrocell is served by a node, which may be for example a base station, Node-B or eNode-B, depending on the architecture of the cellular mobile communication network. These nodes will hereinafter also be referred to as macrocell management units. The area covered by macrocell management units will be referred to as macrocell and may include or overlap with the femtocell(s) of the communication system. As already explained with respect to femtocells also with respect to macrocells it has to be noted that in the related art the term macrocell is used as a synonym for a macrocell management unit. The distinction between macrocell and macrocell management unit is made in the present document for clarification purposes only and is not be construed as providing a different set-up from the known set-up of a macrocells in the related art. According to the present invention known set-ups can be used, which is advantageous as no or only minor adaptation is necessary and the method is thus easy to implement.

Preferably, the communication network according to the present invention includes several macrocell management units. In addition, preferably, several femtocell management units are provided in the communication system. For sake of clarity, reference will hereinafter, however, mainly be made to one femtocell management unit or one macrocell management unit. The respective description also applies to several femtocell management units and several macrocell management units.

According to the present invention, subscriber information is stored at a mobility management function of the communication network of the at least one macrocell management unit. The communication network of the at least one macrocell management unit preferably is the communication network of the communication system, according to the present invention. In particular the communication network is the core network. The communication network, of which the at least one macrocell management unit is part of, is preferably a mobile communication network and more preferably a cellular mobile communication network. The communication network may be for example 3rd Generation Networks, 3GPP, 4th Generation Networks. In particular the communication network may be for example a Global System for Mobile Communications (GSM) network, Universal Mobile Telecommunications System (UMTS) network, Enhanced Data Rates for GSM Evolution (EDGE) network or a Long Term Evolution (LTE) network.

According to the present invention a mobility management function is a key control function of the communication network. The mobility management function thus forms part of the communication network. For example, a switching centre of the communication network may be the mobility management function according to the present invention. This means that the mobility management function is implemented on such a component of the network. According to the present invention, the component where the mobility management function is implemented may serve for this purpose only. However, other functionalities may be provided by the mobility management function.

The subscriber information, which according to the present invention is stored at a mobility management function, includes an indication of the femtocell management unit to which the mobile device is registered. The indication of the femtocell management unit may in particular be an ID and/or address information of the femtocell management unit, for example the femtocell access point. A subscriber who uses a femtocell management unit is register with the femtocell management unit, in particular with the femtocell access point or the femtocell server. It should be noted in particular in overlaying femtocell and macrocells, the user, who communicates via a femtocell management unit in general is registered with the macrocell management unit of the overlaying macrocell. The registration at the femtocell management unit may therefore also be understood as a registration at a macrocell management unit via the femtocell management unit. Also in this case the indication of the femtocell management unit to which the mobile device is registered, is an indication of the femtocell management unit, for example the ID or address.

Storing the subscriber information at the mobility management function according to the present invention preferably comprises storing the information at a database. The database may be part of the mobility management function or may be connected to the mobility management function for access by the mobility management function.

By storing the information of the femtocell management unit to which a user is registered at a mobility management function of the core network, this information can easily be made available throughout the core network and also to connected networks or cells such as other femtocell management units.

According to one embodiment, the mobility management function is a mobile switching centre (MSC) or a mobility management entity (MME) of the core network to which the femtocell management unit is connected or which it is part of.

Communication networks, in particular the above mentioned 3rd Generation Networks, 3GPP, 4th Generation Networks, in particular GSM network, UMTS network, EDGE network or LTE network, comprise a key control node. In a 3G-network this component or node is the mobile switching centre (MSC), in an LTE-Network for example, this component or node is the mobility management entity (MME).

The MSC for example serves as the primary service delivery node and therefore sets up and releases connections between mobile devices, manages hand-over requirements and the like. It is therefore advantageous to use the MSC in a 3G communication network as a mobility management function of the present invention. Storing the subscriber information at the MSC in a data base, which may be on the MSC or may be connected there to is thus advantageous as this information can easily be provided to other components of the communication system. In addition, this information can be provided in real-time.

In particular for 4G networks such as LTE-Networks, the mobility management entity (MME) serves as the mobility management function of the present invention. The MME is the key control-node for the LTE network. It is responsible for idle mode user equipment tracking and paging procedure including retransmissions. It is involved in the bearer activation/deactivation process and is also responsible for authenticating the user (by interacting with the home subscriber server (HSS). Storing the subscriber information at the MME has thus advantages, as this information and in particular the indication of the femtocell management unit can easily be used in communication with other components of the communication network or to with components such as other femtocell management units. In addition, this information can be provided in real-time.

Furthermore, storing this information at an MSC or MME is advantageous as the communication protocol that has to be used to transmit and receive this information is not limited. The known communication according to US 2012/0021736 A1 is only based on IMS/SIP communication. This means that the femtocell access point as well as the core network have to support the IMS platform. The present invention, in particular, where the information is stored on the MSC or MME, in contrast does not have to rely on IMS. Thereby, also the costs for implementing are lower with the present invention, as the femtocell access point does not have to include IMS/SIP functionalities.

According to the present invention, the femtocell management unit receives information on a subscriber departing from the femtocell in a real time manner. This information is received from the mobility management function where the subscriber information is stored. The information on a subscriber departing from a femtocell is transmitted to the femtocell management unit by the mobility management function to which the mobile device was registered via the femtocell management unit before departing the femtocell. By providing this information to the femtocell management unit at the time of departure of the mobile device from the femtocell, real time information is provided at the femtocell management unit. The femtocell management unit may use this information for deleting information from the server of the femtocell and starting and/or cancelling services which are provided by the femtocell management unit.

According to one embodiment of the method, upon selecting of a macrocell management unit by a mobile device which is registered to a mobility management function via a femtocell after changing of location, changing of mobility management function is checked. Selecting a macrocell management unit herein occurs when changing from the coverage area from a femtocell to a macrocell. This change occurs, when the mobile device gets out of coverage of the femtocell. The selection of the macrocell management unit may be performed automatically by the mobile device when leaving a femtocell. It is, however, also possible, that the user selects a macrocell management unit.

The macrocell management unit which provides the coverage for the macrocell which is in the vicinity of or overlaying with the femtocell, from which the mobile device exits, is served by a mobility management function of the communication network, for example by an MSC or MME. Also the femtocell management unit is connected to a mobility management function. Hence, there may be situations where the mobility management function to which the user was registered through the femtocell management unit is identical with the mobility management function of the macrocell into the coverage of which the mobile device has moved. The mobility management function to which the user has been registered through the femtocell management unit while camping on the femtocell, will hereinafter be referred to as the old mobility management function, old MSC or old MME. The mobility management function which serves the macrocell management unit which provides the coverage of the macrocell which the mobile device moves into and which macrocell management unit is selected, is hereinafter referred to as the new mobility management function, new MSC or new MME. In some cases, however, the old and the new mobility management function may be different mobility management functions.

By checking whether the macrocell within which the mobile device has moved and the femtocell from which the mobile device has exited are served or managed by the same mobility management function, the signalling of information can be reduced to a minimum and the method can thus be carried out more rapidly and real-time information can be provided.

The checking of change of mobility management function is preferably carried out at the point, where the mobile device sends a location-updating-request of tracking-area-update request after selection of a macrocell management unit.

As the information about a mobile device walking out of coverage from a femtocell is to be provided to the femtocell management unit, the respective femtocell management unit has to be identified.

If the new and old mobility management function are not the same, that means if a change of mobility management function has occurred, the new mobility management function will not have any information on the femtocell management unit which had been used before.

In this case the new mobility management function may use user identification, in particular an international mobile subscriber identity (IMSI) to determine which femtocell management unit had been used by the mobile device. The user identification, in particular the IMSI, of the mobile device which changed to a new macrocell is provided to the old mobility management function during a location update or tracking-area-update. During this update the IMSI is transmitted from the home location register HLR/ Home Subscriber Server HSS to the old MSC in a cancel location message. With this identification, the mobility management function can determine from the database which femtocell management unit the mobile device was registered to before. The old mobility management function can then send information about the mobile device having arrived at a macrocell to the determined femtocell management unit.

According to one embodiment, therefore upon detection of changing of mobility management function, the old mobility management function uses user identification (IMSI) to determine the femtocell management unit to which the mobile device was registered and sends information about mobile device arriving at a macrocell to the determined femtocell management unit.

By providing the step of checking a change of mobility management function, it may, however, also be possible, to omit certain transmission of information.

In particular, if the new mobility management function and the old mobility management function are the same, the mobile device may be determined at the mobility management function by other information, which is available. In particular, the mobility management function may use the temporary user identification (TMSI) and location identification such as the local area identity (LAI) to determine from the database which femtocell management unit the mobile device had been registered to. These identifications are provided to the mobility management function when a mobile device is first registered with the mobility management function via the femtocell management unit and are thus available. The Location update where information has to be passed on from one mobility management function to another can thus be omitted as the IMSI is not needed at the old mobility management function and/or is already available at the old mobility management function.

If the network is an LTE network and the mobility management function is a mobility management entity MME of the network, the temporary user identification, which is used to determine to which femtocell management unit the mobile device had been registered to is preferably an S-TMSI (SAE Temporary Mobile Subscriber Identity). This identification uniquely identifies a mobile device within an MME group. The S-TMSI is preferably a combination of the MMEC and the M-TMSI. Herein the MMEC is the MME code to identify a MME uniquely within a MME Group and the M-TMSI is the MME Mobile Subscriber Identity, which is unique within an MME. The S-TMSI is stored at the mobility management function, in particular the MME at the time the mobile device first registers to the MME.

According to a further embodiment therefore, upon detection of maintaining of mobility management function, the mobility management function uses a Temporary Mobile Subscriber Identity (TMSI) and location identification (LAI) or an SAE Temporary Mobile Subscriber Identity (S-TMSI) to determine the femtocell management unit to which the mobile device was registered and sends departing information to the determined femtocell management unit.

Preferably, the communication between the mobility management function and the femtocell management unit is either circuit switched or packet switched.

The communication type can be selected according to the nature of the communication network used in the communication system. Most preferably, if the mobility management function is a mobility management entity (MME), the communication between the mobility management function and the femtocell management unit is packet switched, whereas if the mobility management function is a mobile switching centre (MSC), the communication between the mobility management function and the femtocell management unit is circuit switched.

Preferably, information on a mobile device departing from a femtocell or arriving at a macrocell from a femtocell triggers at least one service from the femtocell management unit. The triggering of a service may be the initiation of or the stopping of a service.

With the present invention the location information of the mobile devices can be obtained in a precise way when these devices are camping on the femtocell. This gives new opportunities for operators to deploy new location-based services and drive a new revenue stream. Today, many femtocell based services take advantage of the event that the mobile devices are walking into femtocell coverage and camping on it. For instance, when a device/user is camping on a femtocell owned by a shopping mall, selective coupons and/or welcome short messages can be sent to the device.

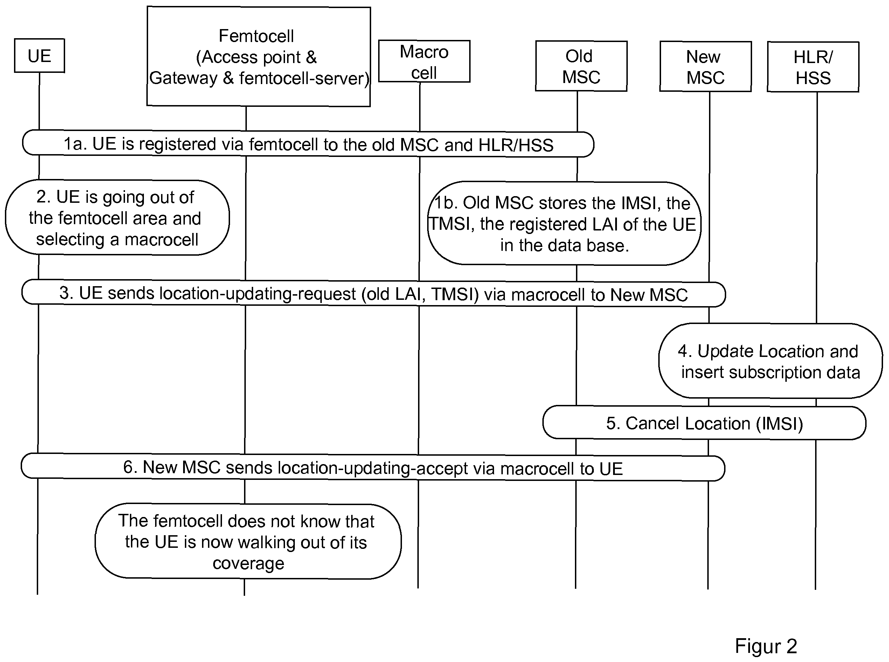

Similarly, it is also desirable to deploy services based on the event when the mobile devices are walking out of femtocell coverage. For instance, certain alarming / supervision services can be deployed when a patient is leaving the hospital area, a kid is leaving the kindergarten area or a car is stolen from a car dealership. With the present invention it is possible for the femtocell management unit to know that mobile devices are walking out of its coverage in a real-time manner, which is not possible with the state of the art 3GPP standards, which is schematically shown in figure 2. Hence, such services can be triggered. Also services, such as sending of promotional information to the user of a mobile device can be triggered, in this case stopped in real-time. In particular, once a customer leaves a femtocell, which covers a shopping mall, no more advertisement will be sent to that user of the mobile device.

According to a further aspect, the invention relates to a mobility management function comprising the features of independent claim 8.

Mobility management function can be software, hardware or a combination thereof. In addition, the mobility management function may reside on one or on several components of the communication system. In particular, the mobility management function may be split into different parts residing or being implemented on different components of the communication system.

Preferably, the mobility management function has means for carrying out the method according to the present invention.

Features and advantages, which are described with respect to the inventive method also apply - where suitable - to the mobility management function of the invention and vice versa.

The invention will now be described again with reference to the enclosed figures, wherein:
Figures 1a and 1b are flowcharts of the signal flow according to one embodiment of the present invention;
Figure 2 is a flowchart of the signal flow according to the prior art; and
Figure 3 is a schematic depiction of a system according to one embodiment of the present invention.

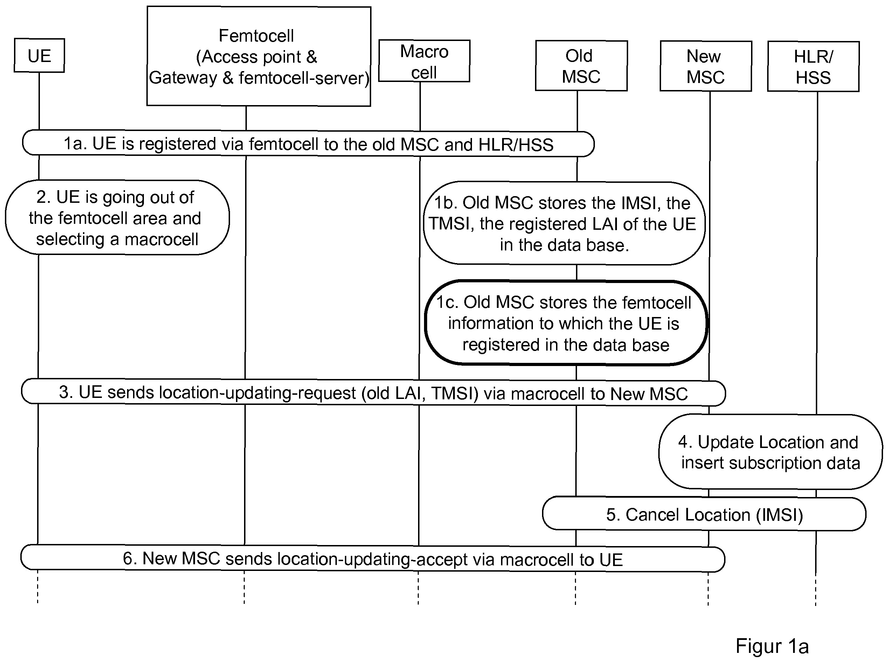

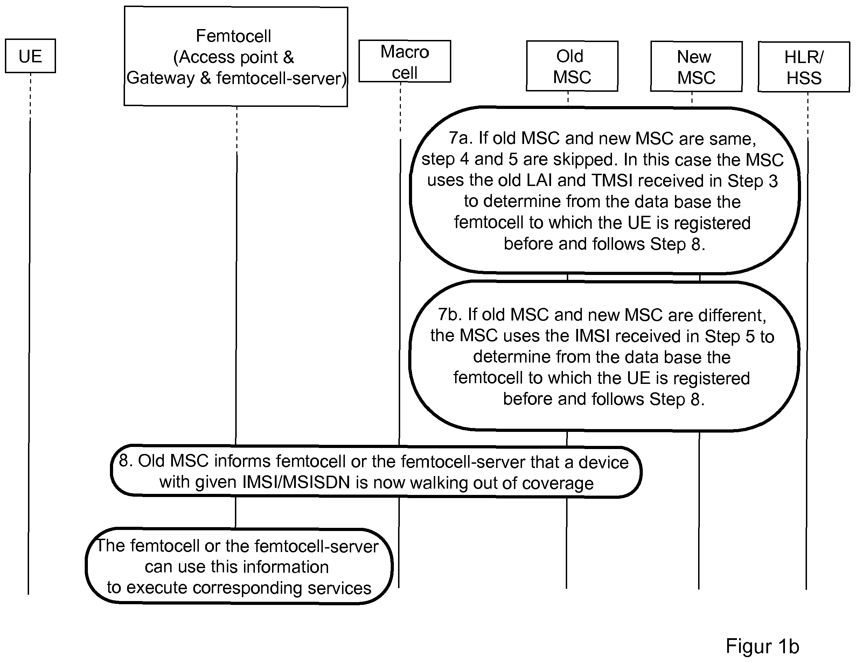

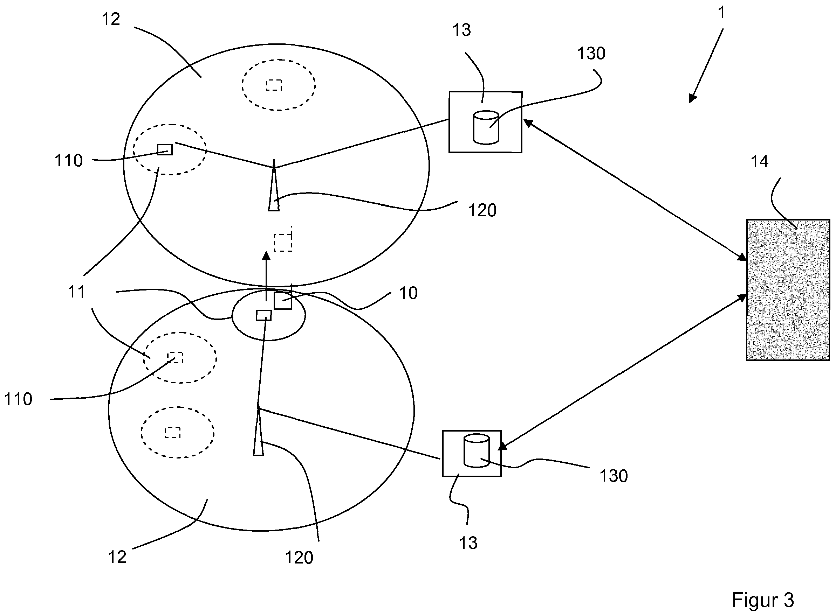

The components of the communication system according to the present invention as shown in figure 1 and 3 are a mobile device 10 of a user of the communication system 1. The mobile device 10 may be a mobile terminal of a mobile communication network such as a mobile telephone or another handheld terminal. On the network side, the communication system 1 comprises at least one femtocell management unit 110, which provides coverage for a femtocell 11, and at least one macrocell management unit 120 which provides coverage for a macrocell 12. Furthermore the communication system 1 comprises mobility management functions 13 which are MSC or MME. Finally, a Home location register / Homes subscriber server (HLR/HSS) 14 is part of the communication system 1 of the invention.

In the figures only one or a few of each of the components is indicated. It is, however, obvious that for example several femtocells, several macrocells as well as several HLR/HSS can be present in a communication system according to the present invention. Also more than two MSC are normally provided in the communication system.

As shown in figure 3, one or several macrocell management units 120, which may be base stations or node-B are served by one mobility management function 13, which may be a MSC or MME. In the area which is covered by one macrocell management function 120 and which thus represents a macrocell 12, one ore more femtocells 11 may be present. Each femtocell 11 is covered by a femtocell management unit 110 which may be a femtocell access point FAP. In figure 3, three femtocells 11 are provided in the lower macrocell 12 and two femtocells 11 are provided in the upper macrocell 12. The macrocell management units 120 communicate with a mobility management function 130, which in turn communicates with a HLR/HSS 14. At the mobility management function 13 a database 130 is provided. This database 130 may be part of the mobility management function 13 or may be connected thereto.

When a user, who may also be referred to as a subscriber, of a mobile device 10 and thus the mobile device 10 enters a femtocell 11, the mobile device 10 is registered at the femtocell management unit 110 and through this unit 110 to a mobility management function 13. The registration may be performed as indicated by the connecting lines in figure 3 from the femtocell management unit 110 through a macrocell management unit 120, the macrocell 12 of which overlaps or overlays the macrocell 12. The registration may, however, also be performed directly from the femtocell management unit 110 to the mobility management function 13.

A mobile device camping in a femtocell 11 is thus registered to the mobility management function 13 either directly or through the macrocell 12 which overlays or overlaps the femtocell 11.

If the mobile device 10 as indicated in figure 3 moves out of coverage from the femtocell 11 to the north, it will enter the upper macrocell 12 in figure 3. Upon entry into the upper macrocell 12, the mobile device 10 will be registered with the mobility management function 13 which serves the upper macrocell 12 via the macrocell management unit 120.

According to the prior art, the femtocell management unit 110 will, however, not receive any information about the mobile device 10 leaving the femtocell 11 at the time of walking out of coverage.

The signal flow, which occurs during movement of a user with a mobile device 10 in a communication system 1, according to the state of the art, will now be described with respect to figure 2.

A mobile device 10 is registered via a femtocell 11 to a mobility management function 13, which may be a MSC or MME and which is connected to a HLR/HSS 14 (step 1a). While the user is within the femtocell 11, the serving mobility management function 13 stores the IMSI, the TMSI and the registered LAI of the mobile device 10 in a data base 130 (step 1b).

If the user moves with his mobile device 10 and exits the area of the femtocell 11, the mobile device 10 triggers a location area update procedure and will search for an select a macrocell 12 (step 2), according to the position of the mobile device 10. The selection of a macrocell 12 can be performed automatically or manually by the user. The section of a macrocell 12 is generally the selection of a macrocell management unit 120. The selected macrocell 12 or macrocell management unit 120 will hereinafter be referred to as the new macrocell 12. Upon selection of the new macrocell 12, the mobile device 10 will send a location-updating-request via the new macrocell 12 and new macrocell management unit 120 to the new mobility management function 13. The location-updating-request will include the old LAI and TMSI of the mobile device 10 (step 3). Upon receipt of the location-updating-request, the new mobility management function 13 will update the location and will insert the subscription data. Subsequently or simultaneously, the HLR/HSS 14 will communicate the cancellation of the location to the old mobility management function 13. This cancellation will include the IMSI (step 5).

The new mobility management function 13 will send a location-updating-accept message via the macrocell 12 to the mobile device 10 (step 6).

From this routine it is obvious, that the femtocell 11 and in particular the femtocell management unit 110 to which the mobile device 10 was originally registered and the area of which had been left, is not aware of the fact that the mobile device 10 has moved out of its area, that means has walked out of its coverage in a real-time manner.

According to the present invention, as shown in figures 1a and 1b, changes to the communication or the signal flow are made. In particular, while a mobile device 10 is within the area of a femtocell 11, the mobility management function 13, for example the MSC or MME stores the femtocell 11 information to which the mobile device 10 is registered in the data base 130 (step 1c). This femtocell information may in particular include an indication, such as an ID or address of the femtocell management unit 110. Step 1c of figures 1a and 1c requires the mobility management function 13 to store the information about whether or not the mobile device 10 is now registered in a femtocell 11. This information is necessary for the mobility management function 13 to identify later in Steps 7a and 7b the event that the mobile device 10 is moving away from the femtocell 11. In other words, without such information the mobility management function 13 is unable to execute Steps 7a and 7b.

In addition, according to the present invention, a check may be performed on whether the old and the new mobility management function 13 are the same 13 (step 7a and 7b). Old mobility management function 13 will hereinafter denote the mobility management function 13 to which the user was registered before departing the femtocell 11. New mobility management function 13 will hereinafter denote the mobility management function 13 to which the user is registered after departing the femtocell 11. Depending on whether the old and new mobility management function 13 are the same or different, different communication may be performed.

If the old and the new mobility management function 13 are the same, than the update of location and insertion of subscription data (step 4) as well as the cancelation of location (step 5) may be omitted. The mobility management function 13 in this case may rather use the old LAI and TMSI, which had been received previously (step 3) to determine from the data base 130 the femtocell 11 to which the mobile device 10 was registered (step 7a) and will then inform the femtocell 11, that means the femtocell management unit 110, for example the femtocell access point FAP or femtocell-server that a device with a given IMSI/MSISDN is now walking out of coverage (step 8).

If, in contrast, the old mobility management function 13 and the new mobility management function 13 are different, the old mobility management function 13 uses the IMSI previously received with the cancel location message to determine from the data base 130 the femtocell 11 to which the mobile device 10 was registered (step 7b). Also in this case, the old mobility management function 13 will then inform the femtocell 11 or femtocell management unit 110 that a mobile device 10 with a given IMSI/MSISDN is now walking out of coverage (step 8).

Step 8 in Figure 1b requires the mobility management function 13 to inform the femtocell management unit 110 when the walking out of coverage event happens. To do so, the mobility management function 13 can either reuse the UE SPECIFIC INFORMATION INDICATION message according to 3GPP TS 25.413 by adding a new optional container or send a new message to indicate the event.

In this way, the femtocell 11, in particular the femtocell management unit 110, such as a femtocell access point, femtocell server or gateway will obtain information on the mobile device leaving the area of the femtocell 11 at least as information that this mobile device 10 has entered a different macrocell 12 and can use this information to execute corresponding services.

The numbering of the steps in the figures is an example of the chronicle order. It is, however, not excluded that steps may be - at least partially - carried out in a different order. For example, the check of step 7a, 7b is preferably performed before steps 4 and 5 are initiated.

The description of the figures has been mainly made with respect to 3G-networks, where the mobility management function is an MSC. The same mechanism, however, applies to for example LTE networks where the mobility management function of MSC is replaced by a mobility management function MME and the location updating is replaced by tracking-area-updating.

With the present invention it is in particular possible to track movement of the mobile device of a user from a femtocell to a macrocell. The communication which is carried out in this respect may be in the CS (circuit switched) domain, that means does not have to be packet switched.

The present invention offers a way to enable the femtocell to obtain the walking out of coverage information.

### Reference Numbers

- 1: communication system
- 10: mobile device (UE)
- 11: femtocell
- 110: femtocell management unit
- 12: macrocell
- 120: macrocell management unit
- 13: mobility management function
- 130: data base
- 14: HLR/HSS

## Claims

1. Method of managing subscriber information of a user of a mobile device (10) in a communication system (1) comprising at least one femtocell management unit (110) of a femtocell (11) and at least one macrocell management unit (120) of a macrocell (12), the subscriber information is stored at a mobility management function (13) of the communication network of the at least one macrocell management unit (120), and the subscriber information includes an indication of the femtocell management unit (110) to which the mobile device (10) is registered, and **characterized in that** information on the user departing from a femtocell is transmitted to the femtocell management unit by the mobility management function to which the mobile device was registered via the femtocell management unit before departing the femtocell, wherein the information on a user departing from a femtocell is received at the femtocell management unit in a real-time manner.

2. Method according to claim 1, **characterized in that** the mobility management function (13) is a mobile switching centre, MSC, or a mobility management entity, MME, of the communication network to which the femtocell management unit (110) is connected to or is part of.

3. Method according to anyone of claims 1 or 2, **characterized in that** upon selecting of a macrocell management unit (120) by a mobile device (10) after changing of location, changing of mobility management function (13) is checked.

4. Method according to claim 3, **characterized in that** upon detection of changing of mobility management function (13), the old mobility management function (13) uses user identification, MSI, to determine the femtocell management unit (110) to which the mobile device (10) was registered and sends information about mobile device (10) arriving at new macrocell (12) to the determined femtocell management unit (110).

5. Method according to claim 3 or 4, **characterized in that** upon detection of maintaining of mobility management function (13), the mobility management function (13) uses user identification, TMSI, and location identification, LAI, or an SAE Temporary Mobile Subscriber Identity, S-TMSI, to determine the femtocell management unit (110) to which the mobile device (10) was registered and sends departing information to the determined femtocell management unit (110).

6. Method according to anyone of claims 1 to 5, **characterized in that** the communication between the mobility management function (13) and the femtocell (11) is either circuit switched or packet switched.

7. Method according to anyone of claims 1 to 6, **characterized in that** information on a mobile device (10) departing from a femtocell (11) triggers at least one service from the femtocell (11).

8. Mobility management function for managing subscriber information of a user of a mobile device (10) in a communication system (1) comprising at least one femtocell management unit (110) and at least one macrocell management unit (120), the mobility management function (13) has a storage unit (130) for storing subscriber information including an indication of a femtocell management unit (110), the mobility management function (13) is part of the communication network of the at least one macrocell management unit (120), **characterized in that** the mobility management function, to which the mobile device was registered via the femtocell management unit before departing the femtocell, transmits information on the user departing from the femtocell to the femtocell management unit, wherein the information on a user departing from a femtocell is received at he femtocell management unit in a real-time manner.

9. Mobility management function according to claim 8, **characterized in that** it has means for carrying out a method according to any of claims 1 to 7.

## Patentansprüche

1. Verfahren zum Managen von Teilnehmerinformationen eines Benutzers eines mobilen Geräts (10) in einem Kommunikationssystem (1), das mindestens eine Femtozellenmanagementeinheit (110) einer Femtozelle (11) und mindestens eine Makrozellenmanagementeinheit (120) einer Makrozelle (12) aufweist, wobei die Teilnehmerinformationen in einer Mobilitätsmanagementfunktion (13) des Kommunikationsnetzes der mindestens einen Makrozellenmanagementeinheit (120) gespeichert sind und die Teilnehmerinformationen eine Anzeige der Femtozellenmanagementeinheit (110), bei der das mobile Gerät (10) registriert ist, umfassen, und **dadurch gekennzeichnet,**
**dass** Informationen über den Benutzer, der sich von einer Femtozelle entfernt, durch die Mobilitätsmanagementfunktion, bei der das mobile Gerät über die Femtozellenmanagementeinheit vor dem Verlassen der Femtozelle registriert wurde, auf die Femtozellenmanagementeinheit übertragen werden, wobei die Informationen über einen Benutzer, der sich von der Femtozelle entfernt, an der Femtozellenmanagementeinheit in einer Echtzeit-Weise empfangen wird.

2. Verfahren nach Anspruch 1, **dadurch gekennzeichnet, dass** die Mobilitätsmanagementfunktion (13) ein mobiles Vermittlungszentrum, MSC, oder eine Mobilitätsmanagementeinheit, MME, des Kommunikationsnetzes ist, mit dem die Femtozellenmanagementeinheit (110) verbunden ist oder ein Teil davon ist.

3. Verfahren nach einem der Ansprüche 1 oder 2, **dadurch gekennzeichnet, dass** bei Auswahl einer Makrozellenmanagementeinheit (120) durch ein mobiles Gerät (10) nach Änderung des Standorts die Änderung der Mobilitätsmanagementfunktion (13) überprüft wird.

4. Verfahren nach Anspruch 3, **dadurch gekennzeichnet, dass** bei Erkennung einer Änderung der Mobilitätsmanagementfunktion (13) die alte Mobilitätsmanagementfunktion (13) eine Benutzeridentifikation, IMSI, verwendet, um die Femtozellenmanagementeinheit (110) zu bestimmen, bei der das mobile Gerät (10) registriert wurde und Informationen über das mobile Gerät (10), das an einer neuen Makrozelle (12) ankommt, an die bestimmte Femtozellenmanagementeinheit (110) sendet..

5. Verfahren nach Anspruch 3 oder 4, **dadurch gekennzeichnet, dass** bei Erkennung der Aufrechterhaltung der Mobilitätsmanagementfunktion (13) die Mobilitätsmanagementfunktion (13) eine Benutzeridentifikation, TMSI, und eine Standortidentifikation, LAI, oder eine SAE temporare mobile Teilnehmeridentität, S-TMSI, verwendet, um die Femtozellenmanagementeinheit (110) zu bestimmen, bei der das mobile Gerät (10) registriert wurde, und Abgangs-Informationen an die bestimmte Femtozellenmanagementeinheit (110) sendet.

6. Verfahren nach einem der Ansprüche 1 bis 5, **dadurch gekennzeichnet, dass** die Kommunikation zwischen der Mobilitätsmanagementfunktion (13) und der Femtozelle (11) entweder leitungsvermittelt oder paketvermittelt ist.

7. Verfahren nach einem der Ansprüche 1 bis 6, **dadurch gekennzeichnet, dass** Informationen auf einem mobilen Gerät (10), das sich von einer Femtozelle (11) entfernt, mindestens einen Dienst von der Femtozelle (11) auslösen.

8. Mobilitätsmanagementfunktion zum Managen von Teilnehmerinformationen eines Benutzers eines mobilen Geräts (10) in einem Kommunikationssystem (1), aufweisend mindestens eine Femtozellenmanagementeinheit (110) und mindestens eine Makrozellenmanagementeinheit (120), wobei die Mobilitätsmanagementfunktion (13) eine Speichereinheit (130) zum Speichern von Teilnehmerinformationen, einschließlich einer Anzeige einer Femtozellenmanagementeinheit (110) aufweist, wobei die Mobilitätsmanagementfunktion (13) Teil des Kommunikationsnetzes der mindestens einen Makrozellenmanagementeinheit (120) ist, **dadurch gekennzeichnet, dass** die Mobilitätsmanagementfunktion, bei der das mobile Gerät registriert wurde, über die Femtozellenmanagementeinheit vor dem Verlassen der Femtozelle Informationen über den Benutzer, der sich von einer Femtozelle entfernt, auf die Femtozellenmanagementeinheit überträgt, wobei die Informationen über einen Benutzer, der sich von der Femtozelle entfernt, an der Femtozellenmanagementeinheit in einer Echtzeit-Weise empfangen wird.

9. Mobilitätsmanagementfunktion nach Anspruch 8, **dadurch gekennzeichnet, dass** diese Mittel zur Durchführung des Verfahrens nach einem der Ansprüche 1 bis 7 aufweist.

## Revendications

1. Procédé de gestion d'informations d'abonné d'un utilisateur d'un dispositif mobile (10) dans un système de communication (1) comprenant au moins une unité de gestion de femtocellule (110) d'une femtocellule (11) et au moins une unité de gestion de macrocellule (120) d'une macrocellule (12), les informations d'abonné sont stockées au niveau d'une fonction de gestion de la mobilité (13) du réseau de communication de la au moins une unité de gestion de macrocellule (120), et les informations d'abonné incluent une indication de l'unité de gestion de femtocellule (110) auprès de laquelle le dispositif mobile (10) est enregistré, et **caractérisé en ce que** des informations sur l'utilisateur sortant d'une femtocellule sont transmises à l'unité de gestion de femtocellule par la fonction de gestion de la mobilité auprès de laquelle le dispositif mobile a été enregistré via l'unité de gestion de femtocellule avant de sortir de la femtocellule, dans lequel les informations sur un utilisateur sortant d'une femtocellule sont reçues au niveau de l'unité de gestion de femtocellule d'une manière en temps réel.

2. Procédé selon la revendication 1, **caractérisé en ce que** la fonction de gestion de la mobilité (13) est un centre de commutation du service des mobiles, MSC, ou une entité de gestion de la mobilité, MME, du réseau de communication auquel l'unité de gestion de femtocellule (110) est connectée ou duquel elle fait partie.

3. Procédé selon l'une quelconque des revendications 1 ou 2, **caractérisé en ce que** lors de la sélection d'une unité de gestion de macrocellule (120) par un dispositif mobile (10) après un changement d'emplacement, un changement de fonction de gestion de la mobilité (13) est vérifié.

4. Procédé selon la revendication 3, **caractérisé en ce que** lors de la détection d'un changement de fonction de gestion de la mobilité (13), l'ancienne fonction de gestion de la mobilité (13) utilise une identification d'utilisateur, IMSI, pour déterminer l'unité de gestion de femtocellule (110) auprès de laquelle le dispositif mobile (10) a été enregistré et envoie des informations concernant le dispositif mobile (10) arrivant au niveau d'une nouvelle macrocellule (12) à l'unité de gestion de femtocellule (110) déterminée.

5. Procédé selon la revendication 3 ou 4, **caractérisé en ce que** lors de la détection du maintien de la fonction de gestion de la mobilité (13), la fonction de gestion de la mobilité (13) utilise une identification d'utilisateur, TMSI, et une identification d'emplacement, LAI, ou une identité temporaire de l'abonné mobile SAE, S-TMSI, pour déterminer l'unité de gestion de femtocellule (110) auprès de laquelle le dispositif mobile (10) a été enregistré et envoie des informations sortantes à l'unité de gestion de femtocellule (110) déterminée.

6. Procédé selon l'une quelconque des revendications 1 à 5, **caractérisé en ce que** la communication entre la fonction de gestion de la mobilité (13) et la femtocellule (11) est soit à commutation de circuits soit à commutation de paquets.

7. Procédé selon l'une quelconque des revendications 1 à 6, **caractérisé en ce que** des informations sur un dispositif mobile (10) sortant d'une femtocellule (11) déclenchent au moins un service provenant de la femtocellule (11).

8. Fonction de gestion de la mobilité permettant de gérer des informations d'abonné d'un utilisateur d'un dispositif mobile (10) dans un système de communication (1) comprenant au moins une unité de gestion de femtocellule (110) et au moins une unité de gestion de macrocellule (120), la fonction de gestion de la mobilité (13) présente une unité de stockage (130) permettant de stocker des informations d'abonné incluant une indication d'une unité de gestion de femtocellule (110), la fonction de gestion de la mobilité (13) fait partie du réseau de communication de la au moins une unité de gestion de macrocellule (120), **caractérisée en ce que** la fonction de gestion de la mobilité, auprès de laquelle le dispositif mobile a été enregistré via l'unité de gestion de femtocellule avant de sortir de la femtocellule, transmet des informations sur l'utilisateur sortant de la femtocellule à l'unité de gestion de femtocellule, dans laquelle les informations sur un utilisateur sortant d'une femtocellule sont reçues au niveau de l'unité de gestion de femtocellule d'une manière en temps réel.

9. Fonction de gestion de la mobilité selon la revendication 8, **caractérisée en ce qu'**elle présente un moyen permettant de mettre en œuvre un procédé selon l'une quelconque des revendications 1 à 7.
